# EUROPÄISCHE PATENTSCHRIFT

(11) **EP 0 518 152 B1**
(45) Veröffentlichungstag und Bekanntmachung des Hinweises auf die Patenterteilung: **27.09.1995**
(21) Anmeldenummer: 92109192.2
(22) Anmeldetag: 01.06.1992
(51) Int. Cl.: C04B 18/02, C04B 14/30, C09C 1/24

(54) **Verfahren zum Einfärben von Baustoffen**
Process for colouring building materials
Procédé pour la coloration de matériaux de construction

(30) Priorität: 14.06.1991 DE 4119667
(43) Veröffentlichungstag der Anmeldung: 16.12.1992
(73) Patentinhaber: BAYER AG, 51368 Leverkusen (DE)
(72) Erfinder: Kröckert, Bernd, Dr., W-4230 Wesel (DE); Linde, Günter, Dr., W-4150 Krefeld (DE)

(56) Entgegenhaltungen:
- EP-A- 0 395 872
- EP-A- 0 396 975
- EP-A- 0 482 449
- DATABASE WPIL, Week 8305, Derwent Publications Ltd., London (GB); AN 83-11213K

## Beschreibung

Die vorliegende Erfindung betrifft ein Verfahren zum Einfärben von Baustoffen mit anorganischen Pigmenten in Form von Granulaten.

Zement- und kalkgebundene Baustoffe wie Putze, Kalksandsteine, Faserzementteile oder Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente und kobalthaltige Spinelle als Bau- und Grünpigmente, kupferhaltige Spinelle als Schwarzpigmente sowie die Mischkristalle aus Bariumsulfat und Bariummanganat als Blaupigmente genannt werden.

Zur Einfärbung von Betonwaren werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver erfolgt in Betonmischungen in einer kurzen Zeit - bis zu wenigen Minuten. Der Nachteil dieser feinen Pulver besteht darin, daß sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, daß sie zum Stauben neigen.

Es ist bekannt, daß diese Nachteile bei der Pigmentierung von Betonteilen vermieden werden können, indem man anstelle trockener Pigmentpulver wäßrige Pigmentsuspensionen einsetzt. Die Verwendung derartiger 30 bis 70 Gew.-% Pigment enthaltenden Pasten oder Slurries hat sich nur zögernd durchsetzen können. Denn durch den zusätzlichen Wassergehalt können je nach Entfernung von Herstell- und Einsatzort erheblich höhere Transportkosten auftreten. Auch kann die mitgelieferte große Wassermenge nicht in jeder Betonzubereitung verarbeitet werden. Störend wirken kann ebenfalls der Gehalt an organischen Chemikalien.

Die Baustoffindustrie ist deshalb größtenteils bei dem Einsatz trockener Pigmentpulver geblieben. Der Verwendung von Pigmenten in Form von Mikrogranulaten stand bisher die Meinung entgegen, Granulate seien in Betonzubereitungen weniger gut dispergierbar. Schwer dispergierbare Pigmentagglomerate erfordern wesentlich längere Mischzeiten. Bei den normalen, in der Baustoffindustrie üblichen kurzen Mischzeit treten infolge schlechter Pigmentverteilung an der Betonoberfläche Stippen, Streifen oder Farbnester auf. Die im Pigment enthaltene Farbstärke kann sich nicht entfalten, so daß bei gleicher Farbintensität des Betonwerkstückes größere Pigmentmengen aufgewendet werden müssen.

In der DE-C 3 619 363 werden für die Einfärbung von Betonwaren Pigmentgranulate beschrieben, die im wesentlichen aus Pigment und einem oder mehreren die Dispergierung des Pigmentes im Beton fördernden Bindemittel(n) bestehen. Als Bindemittel, die in Beton als Dispergierhilfsmittel arbeiten, werden genannt: Alkylbenzolsulfonat, Alkylnaphthalinsulfonat, Ligninsulfonat, sulfatierte Polyglykolether, Melaminformaldehydkondensate, Naphthalinformaldehydkondensate, Glukonsäure, Salze von niedrigmolekularen teilveresterter Styrol-Maleinsäureanhydrid-Copolymerisaten und Copolymere aus Vinylacetat und Krotonsäure. Der Anteil im Pigment soll bevorzugt 2 bis 6 Gew.-% betragen.

Die genannten Dispergierhilfsmittel wirken in Betonmischungen als Verflüssiger. Sie beeinflussen das Wasser-Zement-Verhältnis und wirken sich auf die Betonkonsistenz aus.

Im anorganischen Pigment selbst stellen die zugesetzten Bindemittel als organische Substanzen Fremdkörper dar.

Gemaß der DE-A 2 940 156 weist das anorganische Ausgangspigment einen Harzgehalt von mindestens 20 % auf. Eine Zerteilung entsprechender Granulate im Beton wird durch die Harzanteile hydrophob eingestellter Agglomerate sehr erschwert.

In der DE-C 3 918 694 wird ein Verfahren zur Einfärbung von Baustoffen mit anorganischen Pigmenten in Form von Mikrogranulaten beschrieben, bei dem den Pigmenten Verbindungen des B, Al, Si, Ti, Zn und Sn zugesetzt werden. Dieser Zusatz ist naturgemäß mit Kosten verbunden. Insbesondere wird beispielhaft der Zusatz von Natriumsilikat offenbart. Die Stabilisierung der Granulate erfolgt dabei durch die Verkieselung des Natriumsilikates. Dies kann sich nachteilig auf die Dispergiereigenschaften der Granulate auswirken.

Gegenstand der nachveröffentlichten Anmeldung EP-A 0 482 449 ist ein Verfahren zum Einfarben von Baustoffen mit anorganischen Pigmenten in Form von Granulaten, wobei die Pigmentgranulate aus einer Suspension aus einem oder mehreren Pigmenten und aus einer hydrolysierten oder schwerlöslichen Verbindung eines oder mehrerer Ionensorten hergestellt werden, die per se als wesentlicher Bestandteil in einem oder mehreren Pigmenten zugegen sind.

Die Aufgabe der vorliegenden Erfindung besteht nun darin, ein Verfahren zum Einfarben von Baustoffen zur Verfügung zu stellen, welches die beschriebenen Nachteile des Standes der Technik nicht aufweist.

Diese Aufgabe wurde gelöst durch ein Verfahren zum Einfärben von Baustoffen mit anorganischen Pigmenten in Form von Granulaten, wobei die Pigmentgranulate aus einer Suspension aus einem oder mehreren Pigmenten, die einen Gehalt an löslichen Salzen, bestehend aus Kationen der ersten beiden Hauptgruppen des Periodensystems und Chloriden, Sulfaten und/oder Phosphaten als Anionen, auf Pigment bezogen, von 0,05 - 5 Gew.-%, aufweisen, hergestellt werden.

Überraschenderweise stellte sich heraus, daß der geringe Anteil löslicher Salze die Granalien ausreichend stabilisiert, so daß das Stauben verhindert wird und die Granalien frei fließend sind. Es ist dabei nicht erheblich, ob die Salze den Pigmenten zugegeben werden oder herstellungsbedingt anwesend sind.

Die Granalien können in Form von Perlgranulaten z.B. in Sprühtrocknern oder Wirbelbett-Trocknern oder -Granulatoren erzeugt werden oder in Form von Aufbaugranulaten in Granuliertellern, Dragiertrommeln oder vergleichbaren, dem Fachmann bekannten Aggregaten erzeugt werden.

Bevorzugt sind Pigmente, die mehrwertige Kationen der Übergangsmetalle enthalten. Besonders bevorzugt sind Pigmente, die Titandioxid, Eisenoxid, Chromoxid, Manganoxid und/oder Zinkoxid enthalten. Ganz besonders bevorzugt sind dabei Eisenoxidpigmente. Gute Ergebnisse werden aber auch mit Mischphasenpigmenten erzielt.

Die Menge der erfindungsgemäß zugesetzten leicht löslichen Salze beträgt vorzugsweise, auf Pigment bezogen, 0,1 bis 1 Gew.-%.

Es hat sich gezeigt, daß die erfindungsgemäßen Granulate eine vom Pigment abhängige Partikelgröße nicht überschreiten sollten. Diese ist in erster Linie abhängig vom Schüttgewicht des Granulates, das wiederum ein Maß für die Porosität der Partikel darstellt. Die Prosität wiederum ist im Falle der Sprühgranulation abhängig vom Feststoffgehalt der pumpfähigen Ausgangssuspension vor dem Trocknen, die in Abhängigkeit von Teilchengröße und Teilchenform des Pigments stark schwanken kann. Als Maß für das Schüttgewicht dient das in der DIN 53 194 vom August 1957 definierte Stampfvolumen bzw. Stampfgewicht.

Die beim erfindungsgemäßen Verfahren eingesetzten Pigmentgranulate zeichnen sich dadurch aus, daß sie bei der Bestimmung des Stampfgewichtes nicht zerfallen. Bevorzugt weisen die erfindungsgemäßen Granulate ein Stampfgewicht zwischen 0,5 und 2,5 g/cm³, besonders bevorzugt 0,8 bis 1,5 g/cm³, auf.

Auch sollte die Partikelgröße nicht zu niedrig gewählt werden, da die feinen Anteile unter etwa 50 µm - abhängig von den Pigmenteigenschaften - für das Stauben eines trockenen Pulvers verantwortlich sind. Zudem wird mit Zunahme dieses Anteils die Riesel- oder Fließfähigkeit verschlechtert.

Die erfindungsgemäß durch Sprühtrocknen erhaltenen Granulate liegen in ihrer durchschnittlichen Partikelgröße zwischen 30 und 500 µm, vorzugsweise zwischen 100 und 300 µm, nach Aufbaugranulation erhaltene Granalien bevorzugt 100 µm bis 1 cm.

Die Pigmentgranulate dieser Partikelgröße stellen handhabungsstabile, nicht staubende, gut rieselfähige Pulver dar, die für die Einfärbung von Baustoffen gut geeignet sind. Im Gegensatz zur Offenbarung der DE-C 3 619 363 reichen die Scherkräfte in Betonzubereitungen auf die Granulate für die vollständige Pigmentdispergierung während des Mischzyklus aus. Besonders gute Ergebnisse werden mit Eisenoxid-Pigmenten erzielt.

Das Stampfgewicht der Granulate kann je nach Pigment, Zusatzart und -menge und Wassergehalt der Suspension schwanken. Niedrige Stampfgewichte führen zu wenig stabilen Granulaten, hohe Stampfgewichte zu schlechter Dispergierbarkeit. Die erfindungsgemäßen Eisenoxidschwarzgranulate weisen bevorzugt Stampfgewichte zwischen 0,8 und 1,4 g/cm³, Eisenoxidrotpigmentgranulate zwischen 1,2 und 1,6 g/cm³, auf.

Die erfindungsgemäß eingesetzten Granulate enthalten üblicherweise von 0,1 bis 4 Gew.-% Wasser. Je nach Pigmentfeinheit und Teilchenform kann der Wassergehalt höher liegen, ohne daß die Rieselfähigkeit negativ beeinflußt wird.

Das Verfahren der Erfindung soll an folgenden Beispielen näher erläutert werden, es ist darin jedoch keine Einschränkung auf die Beispiele zu sehen.

Im Falle der aufgeführten Beispiele wurde die Bestimmung der Fließfähigkeit mit dem DIN-Becher 4 (DIN 53 211 vom April 1974) als Auslaufzeit analog auf die zu prüfenden Granulate angewandt.

Die Prüfung der Dispergierbarkeit in Beton erfolgte über die Farbstärkemessung an mit Weißzement hergestellten Prismen bei folgenden Daten: Zement-Quarzsand-Verhältnis 1 : 4, Wasser-Zement-Wert 0,35, Pigmentierungshöhe 1,2 %, bezogen auf Zement, verwendeter Mischer von RK Toni Technik, Berlin, mit 5 l Mischschüssel, Bauform 1551, Drehzahl 140 U/min (Ansatz: 500 g Zement). Nach je 30, 40, 50, 60, 70 und 80 s wurden 4 Mischungsproben (300 g) entnommen und Probekörper (5 x 10 x 2,5 cm) unter Druck (32,5 N/mm²) hergestellt. Härtung der Probekörper: 24 Std. bei 30°C und 95 % rel. Luftfeuchte mit anschließendem Trocknen 24 Std. bei 50°C. Farbdatenmessung über Hunterlab-Gerät: 3 Meßpunkte je Ober- und Unterseite, pro Pigmentmischung 24 Meßpunkte. Die erhaltenen Mittelwerte werden in bezug zu der Probe mit 80 s Mischzeit (Endfarbstärke = 100 %) gesetzt. Die Bestimmung löslicher Salze erfolgte nach DIN-ISO 787 (part 8).

### Beispiele

### Beispiel 1

Eine wäßrige Suspension mit ca. 50 Gew.-% Fe₃O₄ und 0,7 % löslichen Salzen, bezogen auf den Feststoff, (Bayferrox® 318 - Handelsprodukt der Bayer AG) gelangte mit einem Druck von 0,5 bar auf die Verteilerscheibe eines Scheibensprühtrockners. Die Umfangsgeschwindigkeit der Scheibe betrug 88 m/s. Vom Erdgas-Flächenbrenner traten die Verbrennungsgase mit einer Temperatur von 380°C in den Sprühtrockner. Die Austrittstemperatur der Gase lag bei 105°C.

Es wurden stündlich 95 kg Eisenoxidschwarzpigment in mechanisch stabiler Granulatform mit einer durchschnittlichen Partikelgröße von 100 µm und einer Restfeuchte von 0,5 Gew.-% erhalten. Das Stampfgewicht der Granulate betrug 1,14 g/cm³. Das Fließverhalten war sehr zufriedenstellend. Die Prüfung auf Dispergierbarkeit an Betonprismen durch Messung der Farbstärkeentwicklung ergab eine Endfarbstärke bei 50 Sekunden Mischzeit.

### Beispiel 2

Eine wäßrige Suspension von Eisenoxidrot (Bayferrox® 130, Handelsprodukt der Bayer AG), mit einem Feststoffgehalt von 55 Gew.-% und einem Anteil löslicher Salze von 0,3 %, bezogen auf den Feststoff, wurde mit einem Vordruck von 23 bar über die Springbrunnendüse in einen Sprühtrockner eingedüst. Die Düsenöffnung betrug 1,2 mm, und die Wirbelkammer hatte eine Dicke von 2,7 mm. Die Temperatur im Eintragsbereich lag bei 280°C und im Austrag bei 140°C.

Man erhält pro Stunde 65 kg Eisenoxidrotpigment in Form von Granalien mit einer durchschnittlichen Partikelgröße von 120 µm und einer Restfeuchte von 0,3 %. Das Stampfgewicht der Granalien betrug 1,28 g/cm³. Das Fließverhalten war gut. Die Endfarbstärke wurde bei der Prüfung der Dispergierbarkeit in Beton nach 60 Sekunden erreicht.

### Beispiel 3

Eine wäßrige Suspension mit ca. 38 Gew.-% TiO₂ (Material für Bayertitan R-FK-21, Handelsprodukt der Bayer AG), ohne Zusatz organischer Verflüssiger und 1,3 % löslicher Salze, bezogen auf den Feststoff, wurde mit einem Vordruck von 2,5 bar über eine Hohlkegeldüse (Sprühwinkel 30°, Bohrung 1,1 mm) in einen Sprühtrockner eingedüst. Vom Erdgas-Flächenbrenner traten die Verbrennungsgase mit einer Temperatur von 450°C in den Sprühtrockner. Die Austrittstemperatur der Gase lag bei 135°C.

Man erhält pro Stunde 8 kg Titandioxid in Form stabiler Granalien mit einer durchschnittlichen Partikelgröße von 250 µm und einer Restfeuchte von 0,3 %. Das gute Fließverhalten zeigt sich bei der Bestimmung der Auslaufzeit im DIN-Becher, gefunden wurden 66 Sekunden.

## Patentansprüche

1. Verfahren zum Einfärben von Baustoffen mit anorganischen Pigmenten in Form von Granulaten, dadurch gekennzeichnet, daß die Pigmentgranulate aus einer Suspension aus einem oder mehreren Pigmenten, die einen Gehalt an löslichen Salzen, bestehend aus Kationen der ersten beiden Hauptgruppen des Periodensystems und Chloriden, Sulfaten und/oder Phosphaten als Anionen, auf Pigment bezogen, von 0,05 - 5 Gew.-%, aufweisen, erhalten wurden.

2. Verfahren gemäß Anspruch 1, dadurch gekennzeichnet, daß der Gehalt an löslichen Salzen 0,1 - 1 Gew.-% beträgt.

3. Verfahren gemäß einem der Ansprüche 1 oder 2, dadurch gekennzeichnet, daß die Granulate durch Sprühtrocknen erhalten wurden.

4. Verfahren gemäß einem der Ansprüche 1 oder 2, dadurch gekennzeichnet, daß die Granulate durch Aufbaugranulation erhalten wurden.

5. Verfahren gemäß einem oder mehreren der Ansprüche 1 bis 4, dadurch gekennzeichnet, daß als Pigmente solche aus der Gruppe Titanoxid, Eisenoxid, Chromoxid, Manganoxid und/oder Zinkoxid eingesetzt werden.

6. Verfahren gemäß Anspruch 5, dadurch gekennzeichnet, daß als Pigmente Eisenoxidpigmente eingesetzt werden.

7. Verfahren gemäß Anspruch 6, dadurch gekennzeichnet, daß die Eisenoxidpigmente Eisenoxidschwarzgranulate mit Stampfgewichten zwischen 0,8 und 1,4 g/cm³ sind.

8. Verfahren gemäß Anspruch 6, dadurch gekennzeichnet, daß die Eisenoxidpigmente Eisenoxidrotgranulate mit Stampfgewichten zwischen 1,2 und 1,6 g/cm³ sind.

9. Verfahren gemäß einem oder mehreren der Ansprüche 1 bis 5, dadurch gekennzeichnet, daß als Pigmente anorganische Mischphasenpigmente eingesetzt werden.

## Claims

1. A process for colouring building materials with inorganic pigments in the form of granules, characterized in that the pigment granules have been obtained from a suspension of one or more pigments having a content of soluble salts - consisting of cations of the first two main groups of the periodic system and chlorides, sulfates and/or phosphates as anions - of 0.05 to 5% by weight, based on pigment.

2. A process as claimed in claim 1, characterized in that the content of soluble salts is 0.1 to 1% by weight.

3. A process as claimed in claim 1 or 2, characterized in that the granules have been obtained by spray drying.

4. A process as claimed in claim 1 or 2, characterized in that the granules have been obtained by pan granulation.

5. A process as claimed in one or more of claims 1 to 4, characterized in that pigments from the group consisting of titanium oxide, iron oxide, chromium oxide, manganese oxide and/or zinc oxide are used as the pigments.

6. A process as claimed in claim 5, characterized in that iron oxide pigments are used as the pigments.

7. A process as claimed in claim 6, characterized in that the iron oxide pigments are iron oxide black granules having compacted bulk weights of 0.8 to 1.4 g/cm³.

8. A process as claimed in claim 6, characterized in that the iron oxide pigments are iron oxide red granules having compacted bulk weights of 1.2 to 1.6 g/cm³.

9. A process as claimed in one or more of claims 1 to 5, characterized in that inorganic mixed-phase pigments are used as the pigments.

## Revendications

1. Procédé de coloration de matériaux de construction par des pigments inorganiques sous forme de granulats, caractérisé en ce que les granulats de pigments ont été obtenus à partir d'une suspension d'un ou plusieurs pigments présentant une teneur en sels solubles se composant de cations des deux premiers groupes du système périodique des éléments et de chlorures, sulfates et/ou phosphates comme anions, de 0,05 à 5 % en poids par rapport au pigment.

2. Procédé selon la revendication 1, caractérisé en ce que la teneur en sels solubles est de 0,1 à 1 % en poids.

3. Procédé selon une des revendications 1 et 2, caractérisé en ce que les granulats ont été obtenus par séchage par pulvérisation.

4. Procédé selon une des revendications 1 et 2, caractérisé en ce que les granulats ont été obtenus par granulation de synthèse.

5. Procédé selon une ou plusieurs des revendications 1 à 4, caractérisé en ce qu'on utilise comme pigments ceux du groupe oxyde de titane oxyde de fer, oxyde de chrome, oxyde de manganèse et/ou oxyde de zinc.

6. Procédé selon la revendication 5, caractérisé en ce qu'on utilise comme pigments des pigments d'oxyde de fer.

7. Procédé selon la revendication 6, caractérisé en ce que les pigments d'oxyde de fer sont des granulats d'oxyde de fer noir présentant des densités après damage comprises entre 0,8 et 1,4 g/cm³.

8. Procédé selon la revendication 6, caractérisé en ce que les pigments d'oxyde de fer sont des granulats d'oxyde de fer rouge présentant des densités après damage comprises entre 1,2 et 1,6 g/cm³.

9. Procédé selon une ou plusieurs des revendications 1 à 5, caractérisé en ce qu'on utilise comme pigments des pigments inorganiques à phases mixtes.
